# EUROPÄISCHE PATENTANMELDUNG

(11) **EP 1 346 777 A2**
(43) Veröffentlichungstag der Anmeldung: **24.09.2003**
(21) Anmeldenummer: 03005818.4
(22) Anmeldetag: 14.03.2003
(51) Int. Cl.: B05C 11/10

(54) **Vorrichtung und Verfahren zum Messen der Menge eines von einem Applikationsgerät abgegebenen Beschichtungsmaterials**

(30) Priorität: 21.03.2002 DE 10212603
(71) Anmelder: Dürr Systems GmbH, 70435 Stuttgart (DE)
(72) Erfinder: Dürr, Thomas, 71732 Tamm (DE); Fritz, Hans-Georg, 73760 Ostfildern (DE); Herre, Frank, 71739 Oberriexingen (DE)
(74) Vertreter: Heusler, Wolfgang, Dipl.-Ing.

(57) **Zusammenfassung**

Die Erfindung betrifft eine Vorrichtung zum Messen der Menge eines von einem Applikationsgerät abgegebenen Beschichtungsmaterials, mit einem Behälter (1) zum Einführen des Applikationsgeräts und zum Auffangen des von dem Applikationsgerät im eingeführten Zustand abgegebenen Beschichtungsmaterials und einer mit dem Behälter verbundenen Wiegeeinrichtung zum Wiegen des in dem Behälter aufgefangenen Beschichtungsmaterials. Es wird vorgeschlagen, dass der Behälter mit einer Reinigungseinrichtung (4) versehen ist, um das in dem Behälter (1) befindliche Applikationsgerät von anhaftendem Beschichtungsmaterial zu reinigen.

## Beschreibung

Die Erfindung betrifft eine Vorrichtung sowie ein Verfahren zum Messen der Menge eines von einem Applikationsgerät einer Beschichtungsanlage abgegebenen Beschichtungsmaterials gemäß den Oberbegriffen der Ansprüche 1 bzw. 8.

Bei Beschichtungsanlagen auf dem Gebiet der Lackiertechnik ist es wünschenswert, die Menge des von einem Applikationsgerät, wie beispielsweise einem Pulverlackzerstäuber, ausgestoßenen Beschichtungsmaterials zu ermitteln, um Schwankungen des Beschichtungsmaterialausstoßes und damit auch der Lackierqualität zu vermeiden.

Eine bekannte Möglichkeit zur Messung des Beschichtungsmaterialausstoßes eines Applikationsgerätes besteht darin, ein luftdurchlässiges Behältnis, wie beispielsweise einen Stoffsack oder einen Staubsaugerbeutel, während des Betriebs an dem Applikationsgerät zu befestigen, wobei das von dem Applikationsgerät ausgestoßene Beschichtungsmaterial aufgefangen wird, wohingegen die von dem Applikationsgerät abgegebene Luft nach außen entweichen kann. Durch ein Wiegen des luftdurchlässigen Behältnisses vor der Befestigung an dem Applikationsgerät und nach der Aufnahme des Beschichtungsmaterials kann dann die abgegebene Menge des Beschichtungsmaterials ermittelt werden.

Nachteilig daran ist zum einen, dass nur ein Mittelwert des Beschichtungsmaterialausstoßes gemessen werden kann, wohingegen Schwankungen des Beschichtungsmaterialausstoßes während der Sprühzeit nicht berücksichtigt werden können. Zum anderen erfordert diese Meßmethode eine manuelle Befestigung des luftdurchlässigen Behältnisses an dem Applikationsgerät und ist deshalb für die Ermittlung des Beschichtungsmaterialausstoßes während eines Automatikbetriebes ungeeignet.

Es sind weiterhin Beschichtungsanlagen mit einem Vorratsbehälter für das Beschichtungsmaterial bekannt, bei denen der Vorratsbehälter mittels einer Waage gewogen wird, um den Beschichtungsmaterialausstoß zu ermitteln.

Nachteilig an dieser Meßmethode ist jedoch, dass der Einbau einer zusätzlichen Waage für den Vorratsbehälter des Beschichtungsmaterials technisch und finanziell aufwendig ist.

Der Erfindung liegt deshalb die Aufgabe zugrunde, eine Vorrichtung bzw. ein Verfahren zum Messen der Menge eines von einem Applikationsgerät einer Beschichtungsanlage abgegebenen Beschichtungsmaterials zu schaffen, wobei der technische und finanzielle Aufwand möglichst gering sein soll und auch Schwankungen des Beschichtungsmaterialausstoßes erfasst werden sollen.

Die Aufgabe wird, ausgehend von einer bekannten Vorrichtung gemäß dem Oberbegriff des Anspruchs 1, durch die kennzeichnenden Merkmale des Anspruchs 1 bzw. - hinsichtlich eines entsprechenden Verfahrens - durch die Merkmale des Anspruchs 8 gelöst.

Die Erfindung umfasst die allgemeine technische Lehre, den in Beschichtungsanlagen auf dem Gebiet der Lackiertechnik oftmals vorhandenen Behälter zur Reinigung des Applikationsgerätes auch zur Messung der Menge des von den Applikationsgerät abgegebenen Beschichtungsmaterials zu verwenden.

So sind Beschichtungsanlagen mit einem auf einem Roboter angebauten Pulverlackzerstäuber bekannt, bei denen der Roboter den Pulverlackzerstäuber zur Reinigung in einen unten und oben offenen, zylindrischen Behälter mit innenliegenden Blasdüsen einführt, wobei der Pulverlackzerstäuber durch Druckluftstöße gereinigt wird.

Zur Messung des von dem Applikationsgerät abgegebenen Beschichtungsmaterials wird das Applikationsgerät dann vorzugsweise von oben in den Behälter eingeführt und in Betrieb gesetzt, wobei der Behälter das von dem Applikationsgerät abgegebene Beschichtungsmaterial auffängt, so dass die Gewichtszunahme des Behälters der Menge des von dem Applikationsgerät abgegebenen Beschichtungsmaterials entspricht.

Der Behälter ist deshalb mit einer Wiegeeinrichtung verbunden, um aus der Gewichtszunahme des Behälters während des Messvorgangs die Menge des von dem Applikationsgerät abgegebenen Beschichtungsmaterials zu ermitteln. Die Wiegeeinrichtung kann beispielsweise aus Kraftaufnehmern bestehen, die in den Behälter oder in dessen Aufhängung eingebaut sind.

In der bevorzugten Ausführungsform der Erfindung ist der Behälter oben offen, damit das Applikationsgerät von oben eingeführt werden kann. Es ist jedoch grundsätzlich auch möglich, daß das Applikationsgerät von unten in den Behälter eingeführt wird.

Die Unterseite des Behälters ist vorzugsweise durch eine Klappe verschließbar. Hierdurch wird vorteilhaft verhindert, dass während des Messvorgangs Beschichtungsmaterial aus dem Behälter austritt, da die Messung dadurch verfälscht würde.

Zur Vermeidung von Messfehlern ist es auch wünschenswert, dass das Ausstoßverhalten des Applikationsgeräts durch den Messvorgang möglichst wenig beeinflusst wird. Dies soll möglichst auch dann gelten, wenn der Beschichtungsmaterialausstoß während des Messvorgangs in einem weitgehend geschlossenen Behälter erfolgt.

Es ist deshalb in einer Variante der Erfindung vorgesehen, dass der Behälter mindestens in einem Teilbereich eine semipermeable Wandung aufweist, die gegenüber Luft im Wesentlichen durchlässig und gegenüber dem Beschichtungsmaterial im wesentlichen undurchlässig ist. Die Luftdurchlässigkeit einer derartigen semipermeablen Wandung bietet den Vorteil, dass sich während des Messvorgangs allenfalls ein geringer Überdruck innerhalb des Behälters ausbildet, so dass das Ausstoßverhalten des Applikationsgerätes gegenüber dem normalen Betrieb nur geringfügig verändert wird.

In einer anderen Variante der Erfindung ist dagegen in der Wandung des Behälters ein Filterelement angeordnet, das gegenüber Luft im Wesentlichen durchlässig und gegenüber dem Beschichtungsmaterial im Wesentlichen undurchlässig ist. Auch ein derartiges Filterelement bietet den Vorteil, dass die von dem Applikationsgerät abgegebene Luft aus dem Behälter entweichen kann und das Ausstoßverhalten des Applikationsgerätes während des Messvorgangs deshalb weitgehend dem normalen Betrieb entspricht.

In einer Variante der Erfindung ist der Behälter darüber hinaus mit einer Pumpeinrichtung verbunden, die während des Messvorgangs Luft aus dem Behälter absaugt. Dadurch wird vorteilhaft verhindert, dass sich in dem Behälter während des Meßvorgangs ein Überdruck aufbaut, der das Messergebnis verfälschen könnte.

Eine Variante der Erfindung sieht ferner vor, dass vor oder nach dem Messvorgang Druckluft zu Reinigungszwecken von außen durch die semipermeable Wandung oder das Filterelement geblasen wird, um diese von anhaftendem Beschichtungsmaterial zu befreien und dadurch die Luftdurchlässigkeit für den folgenden Messvorgang zu erhalten.

Die in dem Behälter enthaltene Reinigungseinrichtung zur Reinigung des Applikationsgeräts kann im Rahmen der Erfindung so ausgestaltet sein, dass nicht nur das Applikationsgerät selbst gereinigt wird, sondern auch die Innenseite des Behälters. Auf diese Weise kann der Innenraum des Behälters nach einem Messvorgang von dem aufgefangenen Beschichtungsmaterial gereinigt werden. Beispielsweise können hierfür zusätzliche Anblasdüsen vorgesehen sein, die auf die Innenwand des Behälters gerichtet sind und diese während des Reinigungsvorgangs mit Druckluft oder einem Reinigungsfluid anblasen. Es ist jedoch auch möglich, dass die zur Reinigung des Applikationsgeräts ohnehin vorgesehenen Anblasdüsen einen Teilluftstrom auf die Innenwand des Behälters richten, um diesen von anhaftendem Beschichtungsmaterial zu reinigen.

Der im Rahmen der Erfindung verwendete Begriff eines Applikationsgeräts ist allgemein zu verstehen und umfaßt beispielsweise Rotationszerstäuber und Sprühpistolen, jedoch ist die Erfindung auch mit anderen Typen von Applikationsgeräten realisierbar.

Auch der hier verwendete Begriff eines Behälters ist allgemein zu verstehen und nicht auf geschlossene Behälter im engeren Sinne beschränkt. Es ist beispielsweise auch möglich, dass der Behälter teilweise offen ist, sofern der Behälter während des Messvorgangs das von dem Applikationsgerät abgegebene Beschichtungsmaterial auffängt.

Weiterhin kann das Wiegen des Behälters im Rahmen der Erfindung während des Messvorgangs kontinuierlich oder in kurzen Zeitabständen erfolgen, um eine zeitliche Änderung des Beschichtungsmaterialausstoßes zu erfassen.

Es ist jedoch auch möglich, dass der Behälter nur vor und nach dem Beschichtungsmaterialausstoß gewogen wird, wobei vorzugsweise die Zeitspanne zwischen beiden Wiegungen gemessen wird.

Dies ermöglicht die Berechnung des von dem Applikationsgerät abgegebenen Massenstroms des Beschichtungsmaterials aus der Gewichtsdifferenz des Behälters vor und nach dem Ausstoß und der Zeitspanne zwischen den beiden Wiegungen.

Vorzugsweise wird das von dem Applikationsgerät ausgestoßene Beschichtungsmaterial gewogen, während sich das Applikationsgerät in dem Behälter befindet. Es ist jedoch alternativ auch möglich, dass der Behälter vor und nach dem Einführen des Applikationsgeräts in den Behälter gewogen wird, um aus der Gewichtsdifferenz die Menge des ausgestoßenen Beschichtungsmaterials zu ermitteln.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Erfindung näher erläutert. Es zeigen:
- Figur 1: eine erfindungsgemäße Vorrichtung zum Messen der Menge eines von einem Applikationsgerät einer Beschichtungsanlage abgegebenen Beschichtungsmaterial im Querschnitt sowie
- Figur 2: ein alternatives Ausführungsbeispiel einer derartigen Vorrichtung.

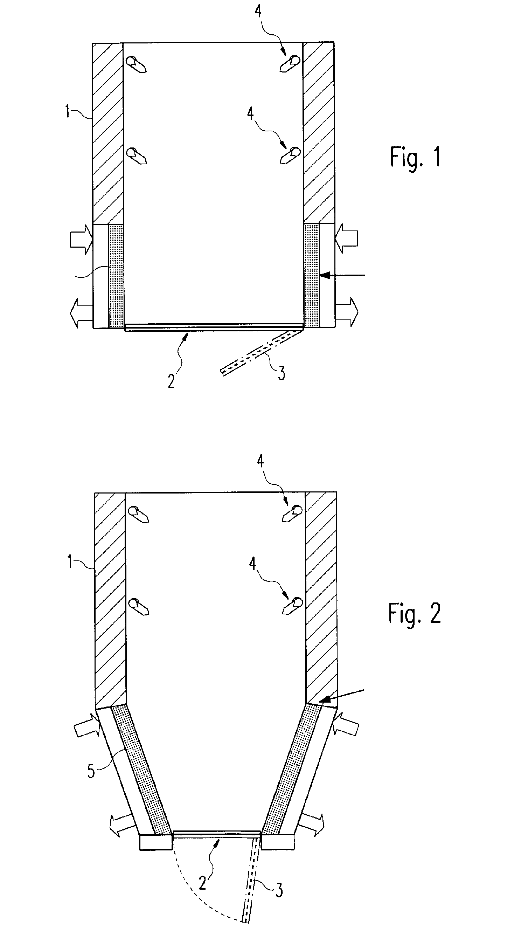

Die in Figur 1 dargestellte Vorrichtung dient zum einen zur Reinigung eines Applikationsgerätes einer Beschichtungsanlage von anhaftendem Beschichtungsmaterial, wobei es sich bei dem Applikationsgerät beispielsweise um einen Pulverlackzerstäuber handeln kann. Hierzu weist die erfindungsgemäße Vorrichtung einen zylindrischen Behälter 1 auf, dessen Mittelachse im Wesentlichen senkrecht verläuft, wobei die obere Stirnseite des Behälters 1 offen ist, damit das Applikationsgerät von oben in den Behälter 1 eingeführt werden kann.

Die untere Stirnseite des Behälters 1 weist dagegen eine Öffnung 2 auf, die durch eine Klappe 3 geöffnet bzw. geschlossen werden kann, wie noch eingehend erläutert wird.

An der Innenwandung des Behälters sind kranzförmig mehrere Anblasdüsen 4 angeordnet, um das Applikationsgerät zu Reinigungszwecken mit Druckluft anzublasen.

Vor dem Reinigungsvorgang wird also zunächst die Klappe 3 geöffnet, so daß das während des Reinigungsvorgangs gelöste Beschichtungsmaterial nach unten austreten kann.

Weiterhin wird das Applikationsgerät von oben in den Behälter 1 eingeführt.

Anschließend wird das Applikationsgerät dann von den Anblasdüsen 4 mit Druckluft angeblasen und dadurch von den anhaftenden Resten des Beschichtungsmaterials weitgehend befreit.

Nach dem Reinigungsvorgang kann das Applikationsgerät dann wieder aus dem Behälter 1 entfernt werden, indem das Applikationsgerät nach oben aus dem Behälter 1 herausgezogen wird.

Zum anderen ermöglicht die in Figur 1 dargestellte Vorrichtung auch die Messung der Menge des von dem Applikationsgerät abgegebenen Beschichtungsmaterials.

Hierzu ist der Behälter 1 mit einer Wiegeeinrichtung verbunden, wobei die Wiegeeinrichtung zur Vereinfachung nicht dargestellt ist.

Weiterhin weist der Behälter 1 im unteren Bereich eine Wandung auf, die aus einer semipermeablen Membran 5 besteht, wobei die Membran 5 für Luft weitgehend durchlässig ist, wohingegen die Membran 5 das von dem Applikationsgerät abgegebene Beschichtungsmaterial nahezu vollständig auffängt.

Zur Messung der Menge des von dem Applikationsgerät abgegebenen Beschichtungsmaterials wird also zunächst das Applikationsgerät von oben in den Behälter 1 eingeführt.

Anschließend wir die Klappe 3 wieder geschlossen, damit während des folgenden Messvorgangs kein Beschichtungsmaterial aus dem Behälter 1 austreten kann, da das Messergebnis dadurch verfälscht würde.

Das Applikationsgerät wird dann in Betrieb versetzt, wobei das von dem Applikationsgerät abgegebene Beschichtungsmaterial von der Innenwand des Behälters 1 bzw. von der Membran 5 aufgefangen wird, was zu einer Gewichtszunahme des Behälters 1 führt.

Die von dem Applikationsgerät ebenfalls abgegebene Druckluft kann hierbei durch die Membran 5 weitgehend ungestört entweiche. Dies ist vorteilhaft, weil sich dadurch während des Messvorgangs im Inneren des Behälters 1 nur ein geringer Überdruck aufbaut und das Ausstoßverhalten des Applikationsgerätes während des Messvorgangs weitgehend dem Ausstoßverhalten während des normalen Betriebs entspricht.

Durch eine Messung des Gewichts des Behälters 1 kann dann in einfacher Weise ermittelt werden, welche Menge an Beschichtungsmaterial von dem Applikationsgerät während des Messvorgangs abgegeben wurde.

Nach dem Messvorgang wird dann die Klappe 3 wieder geöffnet, damit das zu Meßzwecken abgegebene Beschichtungsmaterial nach unten austreten kann.

Zur Vermeidung eines Zusetzens der semipermeablen Membran mit Beschichtungsmaterial ist darüber hinaus vorgesehen, dass die semipermeable Membran 5 zwischen den einzelnen Messvorgängen von außen mit Druckluft angeblasen wird, um die Luftdurchlässigkeit der Membran 5 zu erhalten.

Das in Figur 2 dargestellte Ausführungsbeispiel stimmt weitgehend mit dem vorstehend beschriebenen und in Figur 1 dargestellten Ausführungsbeispiel überein, so dass im Folgenden zur Vermeidung von Wiederholungen auf die vorstehende Beschreibung verwiesen wird und für entsprechende Bauteile dieselben Bezugszeichen verwendet werden.

Die Besonderheit dieses Ausführungsbeispiels besteht im Wesentlichen in der Formgebung des Behälters 1, der im oberen Bereich eine zylindrische Form aufweist und sich im unteren Bereich nach unten hin konisch verjüngt.

Die Erfindung ist nicht auf die vorstehend beschriebenen Ausführungsbeispiele beschränkt. Vielmehr ist eine Vielzahl von Varianten und Abwandlungen denkbar, die ebenfalls von dem Erfindungsgedanken Gebrauch machen und deshalb in den Schutzbereich fallen.

## Patentansprüche

1. Vorrichtung zum Messen der Menge eines von einem Applikationsgerät abgegebenen Beschichtungsmaterials, mit einem Behälter (1) zum Einführen des Applikationsgeräts und zum Auffangen des von dem Applikationsgerät im eingeführten Zustand abgegebenen Beschichtungsmaterials und einer mit dem Behälter (1) verbundenen Wiegeeinrichtung zum Wiegen des in dem Behälter (1) aufgefangenen Beschichtungsmaterials, **dadurch gekennzeichnet, dass** der Behälter (1) mit einer Reinigungseinrichtung versehen ist, um das in dem Behälter (1) befindliche Applikationsgerät von anhaftendem Beschichtungsmaterial zu reinigen.

2. Vorrichtung nach Anspruch 1, **dadurch gekennzeichnet, dass** der Behälter (1) an seiner Unterseite eine Öffnung (2) aufweist, die durch eine Klappe (3) verschließbar ist.

3. Vorrichtung nach Anspruch 1 und/oder 2, **dadurch gekennzeichnet, dass** der Behälter (1) mindestens in einem Teilbereich eine semipermeable Wandung (5) aufweist, die gegenüber Luft im wesentlichen durchlässig und gegenüber dem Beschichtungsmaterial im wesentlichen undurchlässig ist.

4. Vorrichtung nach mindestens einem der vorhergehenden Ansprüche, **dadurch gekennzeichnet, dass** der Behälter (1) eine Wandung mit mindestens einem Filterelement aufweist, wobei das Filterelement gegenüber Luft im wesentlichen durchlässig und gegenüber dem Beschichtungsmaterial im wesentlichen undurchlässig ist.

5. Vorrichtung nach Anspruch 3 und/oder 4, **dadurch gekennzeichnet, dass** der Behälter (1) mit einer Pumpeinrichtung verbunden ist, die Luft aus dem Behälter (1) absaugt und/oder Druckluft zu Reinigungszwecken von außen durch die semipermeable Wandung (5) oder das Filterelement bläst.

6. Vorrichtung nach mindestens einem der vorhergehenden Ansprüche, **dadurch gekennzeichnet, dass** die Reinigungseinrichtung mindestens eine Anblasdüse (4) aufweist, um das Applikationsgerät zu Reinigungszwecken anzublasen.

7. Vorrichtung nach mindestens einem der vorhergehenden Ansprüche, **dadurch gekennzeichnet, dass** das Applikationsgerät ein Zerstäuber ist.

8. Verfahren zum Messen der Menge eines von einem Applikationsgerät abgegebenen Beschichtungsmaterials mit den folgenden Schritten:
- Einführen des Applikationsgeräts in einen Behälter (1)
- Abgabe des Beschichtungsmaterials durch das Applikationsgerät
- Auffangen des von dem Applikationsgerät abgegebenen Beschichtungsmaterials in dem Behälter (1)
- Wiegen des in dem Behälter (1) aufgefangenen Beschichtungsmaterials
- Entfernen des Applikationsgeräts aus dem Behälter (1)
**dadurch gekennzeichnet,**
**dass** das Applikationsgerät in dem Behälter (1) vor und/oder nach der Abgabe des Beschichtungsmaterials durch eine Reinigungseinrichtung (4) gereinigt wird
und/oder
**dass** das in dem Behälter (1) aufgefangene Beschichtungsmaterial gewogen wird, während sich das Applikationsgerät in dem Behälter (1) befindet.

9. Verfahren nach Anspruch 8, **dadurch gekennzeichnet, dass** das in dem Behälter (1) aufgefangene Beschichtungsmaterial während der Abgabe des Beschichtungsmaterials gewogen wird.

10. Verfahren nach Anspruch 8 und/oder 9, **dadurch gekennzeichnet, dass** das in dem Behälter (1) aufgefangene Beschichtungsmaterial gewogen wird, bevor das Applikationsgerät aus dem Behälter (1) entfernt wird.

11. Verfahren nach mindestens einem der Ansprüche 8 bis 10, **dadurch gekennzeichnet, dass** vor der Abgabe des Beschichtungsmaterials durch das Applikationsgerät eine an der Unterseite des Behälters (1) angeordnete Klappe (3) an dem Behälter (1) geschlossen und nach dem Wiegen wieder geöffnet wird.

12. Verfahren nach mindestens einem der Ansprüche 8 bis 11, **dadurch gekennzeichnet, dass** während der Abgabe des Beschichtungsmaterials durch das Applikationsgerät Luft durch eine semipermeable Wandung (5) und/oder durch ein Filterelement aus dem Behälter (1) abgesaugt wird, wobei die semipermeable Wandung (5) und das Filterelement gegenüber Luft im wesentlichen durchlässig und gegenüber dem Beschichtungsmaterial im wesentlichen undurchlässig sind.

13. Verfahren nach Anspruch 12, **dadurch gekennzeichnet, dass** die semipermeable Wandung (5) und/oder das Filterelement vor und/oder nach der Abgabe des Beschichtungsmaterials durch das Applikationsgerät zu Reinigungszwecken von außen angeblasen wird.

14. Verfahren nach mindestens einem der Ansprüche 8 bis 13, **dadurch gekennzeichnet, dass** das Applikationsgerät durch einen Roboter in den Behälter (1) eingeführt und/oder aus dem Behälter (1) entfernt wird.
